# EUROPEAN PATENT APPLICATION

(11) **EP 4 654 427 A1**
(43) Date of publication of application: **26.11.2025**
(21) Application number: 24762948.8
(22) Date of filing: 31.01.2024
(51) Int. Cl.: H02J 7/00, H02H 7/122, H02M 1/36

(54) **POWER CONVERSION APPARATUS AND ENERGY STORAGE APPARATUS**

(30) Priority: 28.02.2023 CN 202310232348
(71) Applicant: Huawei Digital Power Technologies Co., Ltd., Shenzhen, Guangdong 518043 (CN)
(72) Inventor: KONG, Xuejuan, Shenzhen, Guangdong 518043 (CN); WANG, Zheng, Shenzhen, Guangdong 518043 (CN); SHENG, Ren, Shenzhen, Guangdong 518043 (CN); ZHANG, Yifei, Shenzhen, Guangdong 518043 (CN); LIU, Chengyong, Shenzhen, Guangdong 518043 (CN)
(74) Representative: Gill Jennings & Every LLP
(86) International application number: PCT/CN2024/075009
(87) International publication number: WO 2024/179265

(57) **Abstract**

This application provides a power conversion apparatus and an energy storage apparatus. The power conversion apparatus includes a switch module, a power conversion module, a first processing module, and a second processing module, the power conversion module receives, by using the switch module, power discharged by a battery or charges the battery by using the switch module, the first processing module outputs a first on signal and a first start signal, and the second processing module outputs a second on signal and a second start signal. **In** response to the first on signal and the second on signal, the switch module conducts connection between the power conversion module and the battery. **In** response to the first start signal or the second start signal, the power conversion module starts. **In** a structure provided in this application, the first processing module and the second processing module are backups of each other. When the first processing module and the second processing module work normally, it can be ensured that the power conversion module normally starts and the switch module is turned on at a zero current. **In** this way, charging and discharging between the power conversion module and the battery can safely run.

## Description

### CROSS-REFERENCE TO RELATED APPLICATIONS

This application claims priority to Chinese Patent Application No. 202310232348.2, filed with the China National Intellectual Property Administration on February 28, 2023 and entitled "POWER CONVERSION APPARATUS AND ENERGY STORAGE APPARATUS", which is incorporated herein by reference in its entirety.

### TECHNICAL FIELD

This application relates to the battery management field, and in particular, to a power conversion apparatus and an energy storage apparatus.

### BACKGROUND

An energy storage apparatus includes a battery, a battery management system, a charging and discharging loop, and a power converter. The battery is usually a lithium battery. However, thermal runaway of the lithium battery may cause safety threats such as fire, explosion, and release of toxic gases. The energy storage apparatus usually needs to monitor overvoltage, overtemperature, and overcurrent of the battery, and cut off the charging and discharging loop in time, to ensure safe running of the energy storage apparatus.

In the battery management system of the existing energy storage apparatus, one processor is usually used to control, based on one or more parameters of a voltage, a temperature, and a current signal of a battery cell, charging and discharging of the energy storage apparatus to start or stop. However, when the processor of the battery management system is exceptional, the energy storage apparatus cannot implement the foregoing functions. If the processor is exceptional when the energy storage apparatus performs large-current charging and discharging, the energy storage apparatus may be at risk.

### SUMMARY

In view of this, this application provides a power conversion apparatus and an energy storage apparatus. A first processing module and a second processing module of the power conversion apparatus are backups of each other. When one processing module in the power conversion apparatus and the energy storage apparatus provided in this application is exceptional, the other processing module may still control a switch module to be turned on and off, and control a power conversion module to start and stop. This ensures that the switch module is turned on and off at a zero current, and charging and discharging between the power conversion module and a battery can safely run.

According to a first aspect, this application provides a power conversion apparatus. The power conversion apparatus includes a switch module, a power conversion module, a first processing module, and a second processing module, the power conversion module receives, by using the switch module, power discharged by a battery or charges the battery by using the switch module, the first processing module outputs a first on signal and a first start signal, and the second processing module outputs a second on signal and a second start signal. In response to the first on signal and the second on signal, the switch module conducts connection between the power conversion module and the battery. In response to the first start signal or the second start signal, the power conversion module starts.

In the power conversion apparatus provided in this application, both the first processing module and the second processing module need to control the switch module to be turned on, and either the first processing module or the second processing module controls the power conversion module to start. This ensures that the switch module is turned on at a zero current, the power conversion module normally starts, and charging and discharging between the power conversion module and the battery can safely run.

In an implementation, the first processing module is configured to output a first off signal and a first stop-running signal, and the second processing module is configured to output a second off signal and a second stop-running signal. In response to the first stop-running signal or the second stop-running signal, the power conversion module stops running. In response to the first off signal or the second off signal, the switch module cuts off connection between the power conversion module and the battery.

In the power conversion apparatus provided in this application, either the first processing module or the second processing module controls the power conversion module to stop running, and either the first processing module or the second processing module controls the switch module to cut off connection between the power conversion module and the battery. This ensures that the power conversion module stops running, the switch module is turned off at a zero current, and charging and discharging between the power conversion module and the battery can safely stop.

In an implementation, in response to that the second processing module stops running, the first processing module first outputs the first stop-running signal, and outputs the first off signal. In response to that the first processing module stops running, the second processing module first outputs the second stop-running signal, and outputs the second off signal.

When the first processing module in the power conversion apparatus provided in this application determines that the second processing module stops running, the first processing module first controls the power conversion module to stop running, and controls the switch module to cut off connection between the power conversion module and the battery. When determining that the first processing module stops running, the second processing module first controls the power conversion module to stop running, and controls the switch module to cut off connection between the power conversion module and the battery. In the foregoing manner, it is ensured that when any processing module in the power conversion apparatus is exceptional, the other processing module may still control the power conversion module to stop, and control the switch module to be turned off, to ensure that the switch module is turned off at a zero current, and charging and discharging between the power conversion module and the battery can safely stop.

In an implementation, in response to that no periodic signal sent by the second processing module is received within a specified period, the first processing module first outputs the first stop-running signal, and outputs the first off signal. In response to that no periodic signal sent by the first processing module is received within the specified period, the second processing module first outputs the second stop-running signal, and outputs the second off signal.

The first processing module and the second processing module in the power conversion apparatus provided in this application send a periodic signal to each other in the specified period, to determine whether the first processing module or the second processing module is exceptional. Therefore, this implements mutual monitoring between the first processing module and the second processing module. When receiving no periodic signal sent by the second processing module within the specified period, the first processing module first controls the power conversion module to stop running, and controls the switch module to cut off connection between the power conversion module and the battery. When receiving no periodic signal sent by the first processing module within the specified period, the second processing module first controls the power conversion module to stop running, and controls the switch module to cut off connection between the power conversion module and the battery. In this way, when one processing module in the power conversion apparatus is exceptional, the other processing module may still control the power conversion module to stop running and the switch module to be turned off, so that charging and discharging between the power conversion module and the battery can safely stop.

In an implementation, in response to that a charging current or a discharging current of the battery is greater than a current threshold, the first processing module first outputs the first stop-running signal, and outputs the first off signal.

The first processing module in the power conversion apparatus provided in this application obtains the charging current or the discharging current, of the battery, detected by a power conversion module parameter detection circuit. The first processing module determines whether the charging current or the discharging current of the battery is greater than the current threshold. If the first processing module determines that the charging current or the discharging current of the battery is greater than the current threshold, the first processing module first controls the power conversion module to stop running, and controls the switch module to cut off connection between the power conversion module and the battery. Therefore, when the power conversion apparatus performs large-current charging and discharging, a danger to the power conversion apparatus is avoided.

In an implementation, in response to that a voltage of the battery is greater than a voltage threshold or a temperature of the battery is greater than a temperature threshold, the second processing module first outputs the second stop-running signal, and outputs the second off signal.

The second processing module in the power conversion apparatus provided in this application obtains the voltage and the temperature that are of the battery and that are detected by a battery parameter detection circuit. The second processing module determines whether the voltage of the battery is greater than the voltage threshold or the temperature of the battery is greater than the temperature threshold. If the second processing module determines whether the voltage of the battery is greater than the voltage threshold or the temperature of the battery is greater than the temperature threshold, the second processing module first controls the power conversion module to stop running, and controls the switch module to cut off connection between the power conversion module and the battery. Therefore, when overvoltage or thermal runaway occurs in the battery, a danger to the power conversion apparatus is avoided.

In an implementation, the power conversion apparatus includes a logic circuit, the first processing module inputs the first on signal and the first off signal to the logic circuit, the second processing module inputs the second on signal and the second off signal to the logic circuit, and the logic circuit inputs a switch module on signal or a switch module off signal to the switch module. The first on signal includes an on signal 1 and an on signal 2, the second on signal includes an on signal 3 and an on signal 4, the first off signal includes an off signal 1 and an off signal 2, and the second off signal includes an off signal 3 and an off signal 4. In response to the on signal 1, the on signal 2, the on signal 3, and the on signal 4, the logic circuit inputs the switch module on signal to the switch module. In response to any one or more of the off signal 1, the off signal 2, the off signal 3, and the off signal 4, the logic circuit inputs the switch module off signal to the switch module.

The power conversion apparatus provided in this application receives, by using the logic circuit, control signals sent by the first processing module and the second processing module, and controls the switch module by using the logic circuit. Both the first processing module and the second processing module send on signals to the logic circuit, so that the power conversion module is connected to the battery. Either the first processing module or the second processing module sends the off signal to the logic circuit, so that the switch module cuts off connection between the power conversion module and the battery.

In an implementation, the switch module includes a first switch and a second switch, the first switch is connected to a positive electrode of the battery and a first end of the power conversion module, the second switch is connected to a negative electrode of the battery and a second end of the power conversion module, the switch module on signal includes a first switch on signal and a second switch on signal, and the switch module off signal includes a first switch off signal and a second switch off signal. In response to the on signal 1 and the on signal 3, the logic circuit inputs the first switch on signal to the first switch. In response to the on signal 2 and the on signal 4, the logic circuit inputs the second switch on signal to the second switch. In response to the off signal 1 and/or the off signal 3, the logic circuit inputs the first switch off signal to the first switch. In response to the off signal 2 and/or the off signal 4, the logic circuit inputs the second switch off signal to the second switch.

The switch module in the power conversion apparatus provided in this application includes the first switch and the second switch. After both the first switch and the second switch are turned on, the power conversion module is connected to the battery. After either the first switch or the second switch is turned off, the power conversion module is disconnected from the battery. The first processing module sends a control signal to the logic circuit, to control the first switch, and the second processing module sends a control signal to the logic circuit, to control the second switch. The two processing modules work normally, and can control the first switch and the second switch to conduct or cut off connection between the power conversion module and the battery. One processing module is exceptional, and the other processing module may still control the first switch or the second switch to cut off connection between the power conversion module and the battery, to avoid a danger to the power conversion apparatus.

In an implementation, the logic circuit includes a first latch, a second latch, a third latch, a fourth latch, a first AND gate, and a second AND gate, the first processing module inputs the on signal 1 or the off signal 1 to the first latch, the first processing module inputs the on signal 2 or the off signal 2 to the second latch, the second processing module inputs the on signal 3 or the off signal 3 to the third latch, and the second processing module inputs the on signal 4 or the off signal 4 to the fourth latch. The first latch receives the on signal 1 and inputs a high-level signal to the first AND gate, and receives the off signal 1 and inputs a low-level signal to the first AND gate. The second latch receives the on signal 2 and inputs a high-level signal to the second AND gate, and receives the off signal 2 and inputs a low-level signal to the second AND gate. The third latch receives the on signal 3 and inputs a high-level signal to the first AND gate, and receives the off signal 3 and inputs a low-level signal to the first AND gate. The fourth latch receives the on signal 4 and inputs a high-level signal to the second AND gate, and receives the off signal 4 and inputs a low-level signal to the second AND gate. In response to the high-level signals input by the first latch and the third latch, the first AND gate inputs the first switch on signal to the first switch. In response to low-level signals input by the first latch and/or the third latch, the first AND gate inputs the first switch off signal to the first switch. In response to the high-level signals input by the second latch and the fourth latch, the second AND gate inputs the second switch on signal to the second switch. In response to the low-level signals input by the second latch and/or the fourth latch, the second AND gate inputs the second switch off signal to the second switch.

The logic circuit in the power conversion apparatus provided in this application includes a latch and a logic gate circuit. The on signal sent by the processing module may be considered as a rising edge signal, and the off signal sent by the processing module may be considered as a falling edge signal. After receiving the rising edge signal, the latch sends a high-level signal to a correspondingly connected AND gate circuit. After receiving the falling edge signal, the latch sends a low-level signal to a correspondingly connected AND gate circuit. After receiving high-level signals sent by the two latches, the AND gate circuit controls a corresponding switch to be turned on. After receiving a low-level signal sent by either of the two latches, the AND gate circuit controls a corresponding switch to be turned off. Both the first processing module and the second processing module input on signals to the logic circuit. After the logic circuit latches the on signals by using the latch, the first AND gate controls the first switch to be turned on, and the second AND gate controls the second switch to be turned on, so that the power conversion module is connected to the battery. The first processing module or the second processing module inputs the off signal to the logic circuit. After the logic circuit latches the off signal by using one of the latches, the first AND gate controls the first switch to be turned off or the second AND gate controls the second switch to be turned off, so that the power conversion module is disconnected from the battery. The two processing modules work normally, and control the first switch and the second switch to conduct connection between the power conversion module and the battery. In this way, even if one processing module is exceptional, the other processing module may still control the first switch or the second switch to cut off connection between the power conversion module and the battery, to avoid a danger to the power conversion apparatus.

In an implementation, the power conversion apparatus includes a first communication bus, the first processing module transmits a periodic signal to the second processing module through the first communication bus, the second processing module transmits a periodic signal to the first processing module through the first communication bus, and the first processing module and the second processing module control the power conversion module through the first communication bus. The first processing module and the second processing module perform periodic communication through the first communication bus, and monitor whether the first processing module and the second processing module are in a normal response state.

The first processing module and the second processing module in the power conversion apparatus provided in this application establish communication through the first communication bus, and the first processing module and the second processing module send the periodic signal to each other within the specified period through the first communication bus, to determine whether the first processing module or the second processing module is in a normal response state. When one processing module is in an abnormal response state, the other processing module may control the power conversion module to stop running and the switch module to be turned off.

In an implementation, the power conversion apparatus includes the power conversion module parameter detection circuit and the battery parameter detection circuit, the power conversion module parameter detection circuit is configured to detect the charging current or the discharging current of the battery, and the battery parameter detection circuit is configured to detect the voltage of the battery and the temperature of the battery. The power conversion module parameter detection circuit is configured to detect the charging current or the discharging current of the battery, the battery parameter detection circuit is configured to detect the voltage of the battery and the temperature of the battery.

The power conversion module parameter detection circuit in the power conversion apparatus provided in this application detects the charging current or the discharging current of the battery, so that the first processing module or the second processing module obtains the charging current or the discharging current of the battery and determines, based on the charging current or the discharging current of the battery, whether the switch module or the power conversion module works normally. When the first processing module or the second processing module determines that the charging current or the discharging current of the battery is greater than the current threshold, the first processing module or the second processing module first controls the power conversion module to stop running, and controls the switch module to cut off connection between the power conversion module and the battery. The battery parameter detection circuit in the power conversion apparatus provided in this application detects the voltage of the battery and the temperature of the battery, so that the first processing module or the second processing module obtains the voltage of the battery and the temperature of the battery and determines, based on the voltage of the battery and the temperature of the battery, whether the battery works normally. When the first processing module or the second processing module determines that the voltage of the battery is greater than the voltage threshold or the temperature of the battery is greater than the temperature threshold, the first processing module or the second processing module first controls the power conversion module to stop running, and controls the switch module to cut off connection between the power conversion module and the battery.

In an implementation, the power conversion apparatus includes a second communication bus, the power conversion module parameter detection circuit transmits the charging current or the discharging current of the battery to the first processing module through the first communication bus, and the battery parameter detection circuit transmits the voltage of the battery and the temperature of the battery to at least one of the first processing module or the second processing module through the second communication bus.

The first processing module in the power conversion apparatus provided in this application is further connected to the power conversion module parameter detection circuit through the first communication bus, and receives, through the first communication bus, the charging current or the discharging current, of the battery, detected by the power conversion module parameter detection circuit. The first processing module and the second processing module in the power conversion apparatus are further connected to the battery parameter detection circuit through the second communication bus, and the first processing module and the second processing module receive, through the second communication bus, the voltage of the battery and the temperature of the battery that are detected by the battery parameter detection circuit. The two processing modules are backups of each other. Even if either the first processing module or the second processing module is exceptional, the other module may first control the power conversion module to stop running, and control the switch module to cut off connection between the power conversion module and the battery when determining that the voltage of the battery is greater than the voltage threshold or the temperature of the battery is greater than the temperature threshold. Therefore, when overvoltage or thermal runaway occurs in the battery, the power conversion module is disconnected from the battery at a zero current in time, to avoid a danger to the power conversion apparatus.

According to a second aspect, this application provides an energy storage apparatus, including a battery and the foregoing power conversion module. The power conversion module receives power discharged by the battery or charges the battery by using a switch module, a first processing module outputs a first on signal and a first start signal, and a second processing module outputs a second on signal and a second start signal. In response to the first on signal and the second on signal, the switch module conducts connection between the power conversion module and the battery. In response to the first start signal or the second start signal, the power conversion module starts.

### BRIEF DESCRIPTION OF DRAWINGS

FIG. 1 is a diagram 1 of a structure of an energy storage apparatus according to this application;
FIG. 2 is a diagram 2 of a structure of a power conversion apparatus according to this application;
FIG. 3 is a diagram 3 of a structure of a power conversion apparatus according to this application;
FIG. 4 is a diagram 4 of a structure of a power conversion apparatus according to this application;
FIG. 5 is a diagram 5 of a structure of a power conversion apparatus according to this application;
FIG. 6 is a diagram 6 of a structure of a power conversion apparatus according to this application; and
FIG. 7 is a diagram 7 of a structure of a power conversion apparatus according to this application.

### DESCRIPTION OF EMBODIMENTS

To make objectives, technical solutions, and advantages of this application clearer, the following further describes in detail this application with reference to accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to a person skilled in the art. Identical reference numerals in the accompanying drawings denote identical or similar structures. Therefore, repeated descriptions thereof are omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make objectives, technical solutions, and advantages of this application clearer, the following further describes in detail this application with reference to accompanying drawings. A specific operation method in a method embodiment may also be applied to an apparatus embodiment or a system embodiment. It should be noted that in descriptions of this application, "at least one" means one or more, and "a plurality of" means two or more. In view of this, in embodiments of the present invention, "a plurality of' may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in descriptions of this application, terms such as "first" and "second" are merely used for distinguishing and description, but should not be understood as indicating or implying relative importance, or should not be understood as indicating or implying a sequence.

It should be noted that, "connection" in embodiments of this application refers to electrical connection, and connection between two electrical elements may be direct or indirect connection between the two electrical elements. For example, connection between A and B may be direct connection between A and B, or may be indirect connection between A and B through one or more other electrical elements. For example, that A is connected to B may also be that A is directly connected to C, C is directly connected to B, A and B are connected through C.

In an existing energy storage apparatus, one processor is usually used to control, based on one or more parameters of a voltage, a temperature, and a current signal of a battery cell, charging and discharging of the energy storage apparatus to start or stop. However, when the processor of a battery management system is exceptional, the energy storage apparatus cannot implement the foregoing functions. If the processor is exceptional when the energy storage apparatus performs large-current charging and discharging, the energy storage apparatus may be at risk.

In view of this, this application provides a power conversion apparatus and an energy storage apparatus. One processing module in the power conversion apparatus is exceptional, and the other processing module in the power conversion apparatus may still control a switch module to be turned on and off, and control a power conversion module to start and stop. This ensures the switch module in the power conversion apparatus can be turned on and off at a zero current, and charging and discharging between the power conversion module and a battery can also safely run.

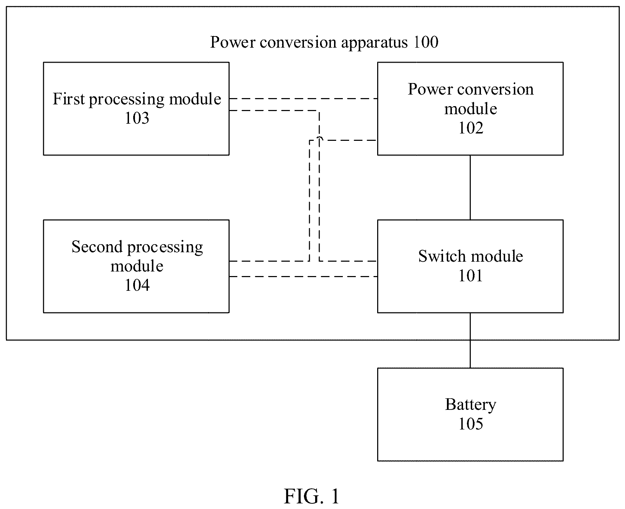

FIG. 1 is a diagram 1 of a structure of an energy storage apparatus according to this application. The energy storage apparatus provided in embodiments of this application includes a power conversion apparatus 100 and a battery 105. The battery 105 includes one or more of a lithium battery, a lead-acid battery, a sodium battery, a magnesium battery, an aluminum battery, a potassium battery, a nickel-cadmium battery, a nickel-hydrogen battery, or a lithium polymer battery.

The power conversion apparatus 100 provided in embodiments of this application includes a switch module 101, a power conversion module 102, a first processing module 103, and a second processing module 104. As shown in FIG. 1, the switch module 101 includes at least one switch, one end of the power conversion module 102 is connected to alternating current mains or a power-consuming device, and the other end of the power conversion module 102 is connected to the battery 105 by using the switch module 101.

For example, the switch module 101 includes a first switch and a second switch. A positive electrode of the battery 105 is connected to a positive end of the power conversion module 102 by using the first switch, and a negative electrode of the battery 105 is connected to a negative end of the power conversion module 102 by using the second switch.

In embodiments of this application, the power conversion module 102 may include an alternating current-direct current (alternating current-direct current, AC-DC) circuit and a direct current-alternating current (direct current-alternating current, DC-AC) circuit.

The power conversion module 102 may perform alternating current-direct current conversion, by using the AC-DC circuit, on an alternating current input by the alternating current mains, and provide, by using the switch module 101, a direct current obtained through conversion for the battery 105, to charge the battery 105. The power conversion module 102 may further perform, by using the DC-AC circuit, direct current-alternating current conversion on a current output by the battery 105, and provide an alternating current obtained through conversion for the alternating current mains or the power-consuming device, to discharge the battery 105.

In embodiments of this application, the first processing module 103 and the second processing module 104 include one or a combination of a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA) or another programmable logic device, a transistor logic device, or a hardware component.

In embodiments of this application, the first processing module 103 and the second processing module 104 may establish communication connection to the switch module 101 and the power conversion module 102 through a communication bus, so that the first processing module 103 sends a first on signal to the switch module 101 and sends a first start signal to the power conversion module 102 through the communication bus, and the second processing module 104 sends a second on signal to the switch module 101 and sends a second start signal to the power conversion module 102 through the communication bus.

For example, the first processing module 103 sends the first start signal to the power conversion module 102, and the power conversion module 102 may change a status of at least one switch device in the power conversion module 102 based on the first start signal, to start the power conversion module 102. In addition, the first processing module 103 may further send a voltage control signal to the power conversion module 102, to adjust a discharging voltage or a charging voltage of the power conversion module 102.

In embodiments of this application, connection may be established between the first processing module 103 may establish communication and the second processing module 104 through the communication bus, and the first processing module 103 and the second processing module 104 send a periodic signal to each other in a specified period through the communication bus, to determine whether the first processing module 103 or the second processing module 104 is exceptional. Therefore, this implements mutual monitoring between the first processing module 103 and the second processing module 104. For example, if the first processing module 103 receives no periodic signal sent by the second processing module 104 within the specified period, the first processing module 103 first controls the power conversion module 102 to stop running, and controls the switch module 101 to cut off connection between the power conversion module 102 and the battery 105. This ensures that charging and discharging between the power conversion module 102 and the battery 105 can safely run.

The communication bus in the foregoing embodiment includes but is not limited to the following bus types: a serial bus, a controller area network (controller area network, CAN), power line communication (power line communication, PLC), and the like. This is not excessively limited herein.

In addition, in the foregoing embodiment, communication may be established between the modules that need to establish communication connection in the following manners: a wired local area network (local area network, LAN), a 6G\5G\4G\3G\2G network, a general packet radio service (general packet radio service, GPRS), a wireless network (Wi-Fi), Bluetooth, ZigBee (ZigBee), an infrared manner, and the like.

In an implementation, in response to the first on signal and the second on signal, the switch module 101 conducts connection between the power conversion module 102 and the battery 105. In response to the first start signal or the second start signal, the power conversion module 102 starts. The first processing module 103 outputs the first on signal, and the second processing module 104 outputs the second on signal. The first processing module 103 and the second processing module 104 need to jointly control the switch module 101 to be turned on. The first processing module 103 outputs the first start signal, the second processing module 104 outputs the second start signal, and either the first processing module 103 or the second processing module 104 can control the power conversion module to start. For example, after the first processing module 103 and the second processing module 104 perform power-on self-test, the first processing module 103 outputs the first start signal, and the second processing module 104 outputs the second start signal, so that electrical connection is established between the power conversion module 102 and the battery 105. In addition, when either the first processing module 103 or the second processing module 104 outputs the start signal, the power conversion module 102 is started, so that the switch module 101 is turned on at a zero current, and charging and discharging between the power conversion module and the battery can safely run.

In an implementation, the first processing module 103 is configured to output a first off signal and a first stop-running signal, and the second processing module 104 is configured to output a second off signal and a second stop-running signal. In response to the first stop-running signal or the second stop-running signal, the power conversion module 102 stops running. In response to the first off signal or the second off signal, the switch module 101 cuts off connection between the power conversion module 102 and the battery 105.

Either the first processing module 103 or the second processing module 104 can control the power conversion module 102 to stop running, and either the first processing module 103 or the second processing module 104 can control the switch module 101 to cut off connection between the power conversion module 102 and the battery 105. In this way, even if one processing module is exceptional, the other processing module that normally works may still control the power conversion module 102 to stop running and the switch module 101 to be turned off at a zero current, and control charging and discharging between the power conversion module 102 and the battery 105 to safely stop.

In an implementation, in response to that the second processing module 104 stops running, the first processing module 103 first outputs the first stop-running signal, and outputs the first off signal; and in response to that the first processing module 103 stops running, the second processing module 104 first outputs the second stop-running signal, and outputs the second off signal. Therefore, the power conversion apparatus 100 can safely cut off connection between the power conversion module 102 and the battery 105 in time after the first processing module 103 or the second processing module 104 is exceptional.

When determining that the second processing module 104 stops running, the first processing module 103 may first control the power conversion module 102 to stop running, and control the switch module 101 to cut off connection between the power conversion module 102 and the battery 105. When determining that the first processing module 103 stops running, the second processing module 104 may also first control the power conversion module 102 to stop running, and control the switch module 101 to cut off connection between the power conversion module 102 and the battery 105. In this way, it is ensured that when any processing module in the power conversion apparatus 100 is exceptional, the other processing module may still control the power conversion module 102 to stop, and control the switch module 101 to be turned off. In addition, it is ensured that the switch module 101 can be turned off at a zero current, and charging and discharging between the power conversion module 102 and the battery 105 can safely stop.

In an implementation, in response to that no periodic signal sent by the second processing module 104 is received within the specified period, the first processing module 103 first outputs the first stop-running signal, and outputs the first off signal; and in response to that no periodic signal sent by the first processing module 103 is received within the specified period, the second processing module 104 first outputs the second stop-running signal, and outputs the second off signal. In this case, whether the first processing module 103 and the second processing module 104 are exceptional is monitored in time.

When the first processing module and the second processing module are backups of each other, after time in which any processing module (the first processing module 103 or the second processing module 104) is exceptional exceeds process safety time (which indicates that a permanent error occurs on the processing module), the other processing module that is uncharged can cut off connection between the power conversion module 102 and the battery 105. For example, if the first processing module 103 receives no periodic signal sent by the second processing module 104 within the specified period, the first processing module controls the power conversion module 102 to stop running, and controls the switch module 101 to cut off connection between the power conversion module 102 and the battery 105. In this way, charging and discharging between the power conversion module 102 and the battery 105 can safely run.

Because the first processing module 103 or the second processing module 104 may attempt to automatically reset and restart, when time in which the first processing module 103 or the second processing module 104 is exceptional is less than the process safety time (which indicates that a transient error occurs on the processing module), the power conversion apparatus 100 can still be maintained in a working state. This prevents the power conversion apparatus 100 from being frequently started and shut down. In an implementation, duration of the specified period is process safety time (process safety time, PST). The process safety time is a period of time between time at which a failure that may cause a hazardous event occurs in a control system and time at which a measure needs to be taken in the control system to prevent the hazardous event from occurring.

In an implementation, in response to that a charging current or a discharging current of the battery 105 is greater than a current threshold, the first processing module 103 first outputs the first stop-running signal, and outputs the first off signal.

The first processing module 103 is configured to monitor charging and discharging cases of the battery 105. The first processing module 103 obtains the charging current or the discharging current, of the battery 105, detected by a power conversion module parameter detection circuit. The first processing module 103 determines whether the charging current or the discharging current of the battery 105 is greater than the current threshold. If the first processing module 103 determines that the charging current or the discharging current of the battery 105 is greater than the current threshold, the first processing module 103 first controls the power conversion module 102 to stop running, and controls the switch module 101 to cut off connection between the power conversion module 102 and the battery 105. When charging/discharging currents of the power conversion apparatus 100 are too large, the first processing module 103 controls the power conversion module 102 to stop running, and controls the switch module 101 to be turned off at a zero current. This safely stops charging and discharging between the power conversion module 102 and the battery 105, and avoids a danger.

In an implementation, in response to that a voltage of the battery 105 is greater than a voltage threshold or a temperature of the battery 105 is greater than a temperature threshold, the second processing module 104 first outputs the second stop-running signal, and outputs the second off signal.

The second processing module 104 is configured to monitor whether thermal runaway or overvoltage occurs in the battery 105. The second processing module 104 obtains the voltage of the battery and the temperature of the battery that are detected by a battery parameter detection circuit. The second processing module 104 determines whether the voltage of the battery is greater than the voltage threshold or the temperature of the battery is greater than the temperature threshold. If the second processing module 104 determines whether the voltage of the battery is greater than the voltage threshold or the temperature of the battery is greater than the temperature threshold, the second processing module 104 first controls the power conversion module 102 to stop running, and controls the switch module 101 to cut off connection between the power conversion module 102 and the battery 105. Therefore, when overvoltage or thermal runaway occurs in the battery 105, a danger to the power conversion apparatus 100 is avoided.

In an implementation, the power conversion apparatus 100 includes a logic circuit, the first processing module 103 inputs the first on signal and the first off signal to the logic circuit, the second processing module 104 inputs the second on signal and the second off signal to the logic circuit, and the logic circuit inputs the switch module 101 on signal or the switch module 101 off signal to the switch module 101.

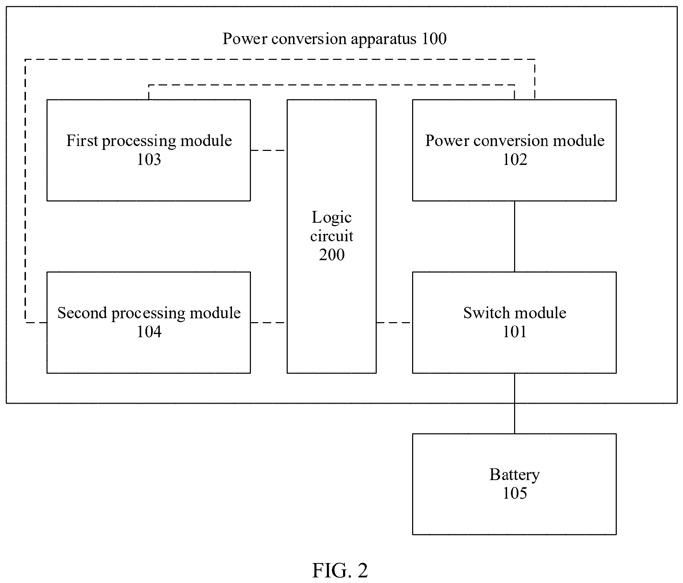

FIG. 2 is a diagram 2 of a structure of a power conversion apparatus according to this application. As shown in FIG. 2, the first processing module 103 inputs the first on signal and the first off signal to the logic circuit 200, the second processing module 104 inputs the second on signal and the second off signal to the logic circuit 200, and the logic circuit 200 inputs the switch module 101 on signal or the switch module 101 off signal to the switch module 101.

The first on signal includes an on signal 1 and an on signal 2, the second on signal includes an on signal 3 and an on signal 4, the first off signal includes an off signal 1 and an off signal 2, and the second off signal includes an off signal 3 and an off signal 4. In response to the on signal 1, the on signal 2, the on signal 3, and the on signal 4, the logic circuit 200 inputs the switch module 101 on signal to the switch module 101. In response to any one or more of the off signal 1, the off signal 2, the off signal 3, and the off signal 4, the logic circuit 200 inputs the switch module 101 off signal to the switch module 101.

The logic circuit 200 receives control signals sent by the first processing module 103 and the second processing module 104, and controls the switch module 101. After the first processing module 103 sends the first on signal to the logic circuit 200, and the second processing module 104 sends the second on signal to the logic circuit 200, in response to the on signal 1 and the on signal 2 included in the first on signal and the on signal 3 and the on signal 4 included in the first on signal, the logic circuit 200 controls the switch module 101 to be turned on. After the first processing module 103 sends the first off signal to the logic circuit 200, or the second processing module 104 sends the second off signal to the logic circuit 200, in response to any one of the off signal 1 or the off signal 2 included in the first off signal and the off signal 3 or the off signal 4 included in the first off signal, the logic circuit 200 controls the switch module 101 to be turned off.

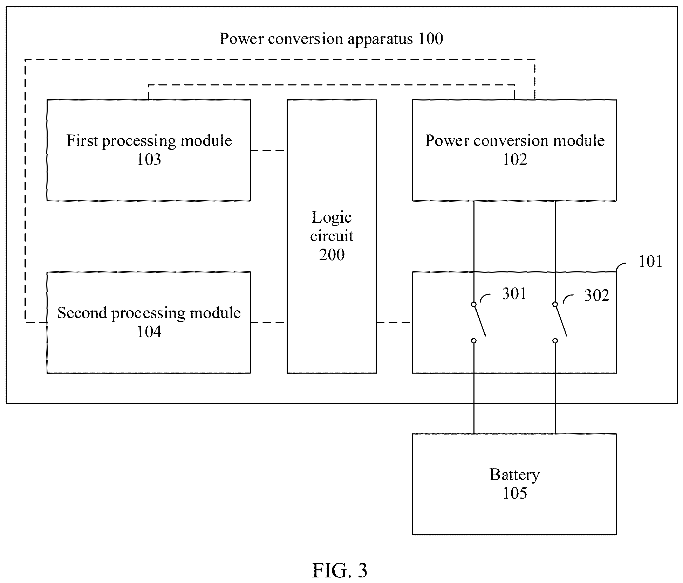

FIG. 3 is a diagram 3 of a structure of a power conversion apparatus according to this application. As shown in FIG. 3, in an implementation, the switch module 101 includes a first switch 301 and a second switch 302, the first switch 301 is connected to a positive electrode of the battery 105 and a first end of the power conversion module 102, the second switch 302 is connected to a negative electrode of the battery 105 and a second end of the power conversion module 102, and the switch module 101 on signal includes a first switch 301 on signal and a second switch 302 on signal.

In response to the on signal 1 and the on signal 3, the logic circuit 200 inputs the first switch 301 on signal to the first switch 301. In response to the on signal 2 and the on signal 4, the logic circuit 200 inputs the second switch 302 on signal to the second switch 302. In response to the off signal 1 and/or the off signal 3, the logic circuit 200 inputs the first switch 301 off signal to the first switch 301. In response to the off signal 2 and/or the off signal 4, the logic circuit 200 inputs the second switch 302 off signal to the second switch 302.

The first switch 301 is connected to the positive electrode of the battery 105 and the first end of the power conversion module 102, and the second switch 302 is connected to the negative electrode of the battery 105 and the second end of the power conversion module 102. When the positive electrode of the battery 105, the negative electrode of the battery 105, and the power conversion module 102 are connected, the power conversion module 102 can receive power discharged by the battery 105 or charge the battery 105. After both the first switch 301 and the second switch 302 are turned on, the power conversion module 102 can be connected to the battery 105. After either the first switch 301 or the second switch 302 is turned off, the power conversion module 102 is disconnected from the battery 105. The first processing module 103 sends a control signal to the logic circuit 200, to control the first switch 301, and the second processing module 104 sends a control signal to the logic circuit, to control the second switch 302. The two processing modules work normally, and the first processing module 103 controls the first switch 301 or the second processing module 104 controls the second switch 302, to connect the power conversion module 102 to the battery 105 or disconnect the power conversion module 102 from the battery 105. In this way, after one processing module is exceptional, the other processing module may still control the first switch 301 or the second switch 302 to cut off connection between the power conversion module 102 and the battery 105, to avoid a danger to the power conversion apparatus 100.

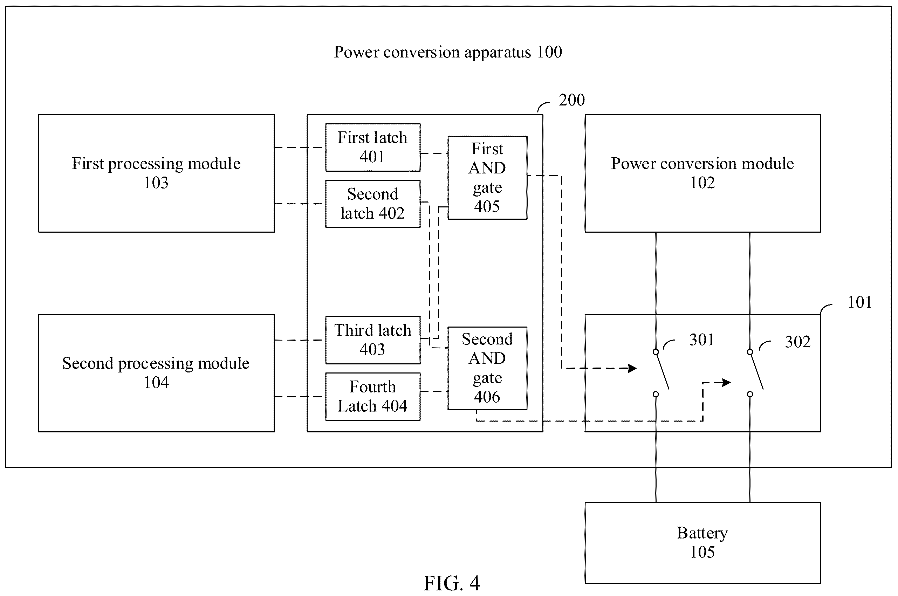

FIG. 4 is a diagram 4 of a structure of a power conversion apparatus according to this application. As shown in FIG. 4, in an implementation, the logic circuit 200 includes a first latch 401, a second latch 402, a third latch 403, a fourth latch 404, a first AND gate 405, and a second AND gate 406, the first processing module 103 inputs the on signal 1 or the off signal 1 to the first latch 401, the first processing module 103 inputs the on signal 2 or the off signal 2 to the second latch 402, the second processing module 104 inputs the on signal 3 or the off signal 3 to the third latch 403, and the second processing module 104 inputs the on signal 4 or the off signal 4 to the fourth latch 404.

The first latch 401 receives the on signal 1 and inputs a high-level signal to the first AND gate 405, and receives the off signal 1 and inputs a low-level signal to the first AND gate 405. The second latch 402 receives the on signal 2 and inputs a high-level signal to the second AND gate 406, and receives the off signal 2 and inputs a low-level signal to the second AND gate 406. The third latch 403 receives the on signal 3 and inputs a high-level signal to the first AND gate 405, and receives the off signal 3 and inputs a low-level signal to the first AND gate 405. The fourth latch 404 receives the on signal 4 and inputs a high-level signal to the second AND gate 406, and receives the off signal 4 and inputs a low-level signal to the second AND gate 406.

In response to the high-level signals input by the first latch 401 and the third latch 403, the first AND gate 405 inputs the first switch on signal to the first switch 301. In response to low-level signals input by the first latch 401 and/or the third latch 403, the first AND gate 405 inputs the first switch off signal to the first switch 301. In response to high-level signals input by the second latch 402 and the fourth latch 404, the second AND gate 406 inputs the second switch on signal to the second switch 302. In response to the low-level signals input by the second latch 402 and/or the fourth latch 404, the second AND gate 406 inputs the second switch off signal to the second switch 302.

For example, that the processing modules send the on signal 1 to the on signal 4 to the latches may be equivalent to that the processing modules input rising edge signals to the latches, and the processing modules send the off signal 1 to the off signal 4 to the latches may be equivalent to that the processing modules input falling edge signals to the latches. After receiving the rising edge signals sent by the processing modules, the first latch 401 to the fourth latch 404 latch the rising edge signals to a high-level state. After receiving the falling edge signals sent by the processing modules, the first latch 401 to the fourth latch 404 latch the falling edge signals to a low-level state. After receiving high-level signals sent by the two latches, the AND gate circuit inputs the switch on signal to the switch, to control the corresponding switch to be turned on. After receiving the low-level signal sent by either of the two latches, the AND gate circuit inputs the switch off signal to the switch, to control the corresponding switch to be turned off.

Both the first processing module 103 and the second processing module 104 input on signals to the logic circuit 200. After the logic circuit 200 latches the high-level signals by using the latch, the first AND gate 405 controls the first switch 301 to be turned on, and the second AND gate 406 controls the second switch 302 to be turned on, so that the power conversion module 102 is connected to the battery 105. The first processing module 103 or the second processing module 104 inputs the off signal to the logic circuit 200. After the logic circuit 200 latches the low-level signal by using at least one latch, the first AND gate 405 controls the first switch 301 to be turned off or the second AND gate 406 controls the second switch 302 to be turned off, so that the power conversion module 102 is disconnected from the battery 105. Based on the foregoing descriptions of the latch and the AND gate circuit, a logic circuit truth table corresponding to the logic circuit 200 provided in this application conforms to Table 1.

**Table 1 Logic circuit truth table**

| Signal input to a latch | | | | Signal output by the latch | | | | Signal output by an AND gate | |
|---|---|---|---|---|---|---|---|---|---|
| Latch 1 | Latch 2 | Latch 3 | Latch 4 | Latch 1 | Latch 2 | Latch 3 | Latch 4 | First AND gate | Second AND gate |
| Rising edge | / | / | / | Newly latched high level | Originally latched low level | Originally latched low level | Originally latched low level | Off | Off |
| Rising edge | / | / | / | Newly latched high level | Originally latched low level | Originally latched high level | Originally latched high level | On | Off |
| Rising edge | / | / | / | Newly latched high level | Originally latched high level | Originally latched low level | Originally latched low level | Off | Off |
| Rising edge | / | / | / | Newly latched high level | Originally latched high level | Originally latched high level | Originally latched high level | On | On |
| / | Rising edge | / | / | Originally latched low level | Newly latched high level | Originally latched low level | Originally latched low level | Off | Off |
| / | Rising edge | / | / | Originally latched low level | Newly latched high level | Originally latched high level | Originally latched high level | Off | On |
| / | Rising edge | / | / | Originally latched high level | Newly latched high level | Originally latched low level | Originally latched low level | Off | Off |
| Rising edge | Rising edge | / | / | Newly latched high level | Newly latched high level | Originally latched low level | Originally latched low level | Off | Off |
| Rising edge | Rising edge | / | / | Newly latched high level | Newly latched high level | Originally latched high level | Originally latched high level | On | On |
| / | Rising edge | / | / | Originally latched high level | Newly latched high level | Originally latched high level | Originally latched high level | On | On |
| / | / | Rising edge | / | Originally latched low level | Originally latched low level | Newly latched high level | Originally latched low level | Off | Off |
| / | / | Rising edge | / | Originally latched low level | Originally latched low level | Newly latched high level | Originally latched high level | Off | On |
| / | / | Rising edge | / | Originally latched high level | Originally latched high level | Newly latched high level | Originally latched low level | On | Off |
| / | / | Rising edge | / | Originally latched high level | Originally latched high level | Newly latched high level | Originally latched high level | On | On |
| / | / | / | Rising edge | Originally latched low level | Originally latched low level | Originally latched low level | Newly latched high level | Off | Off |
| / | / | / | Rising edge | Originally latched low level | Originally latched low level | Originally latched high level | Newly latched high level | Off | On |
| / | / | / | Rising edge | Originally latched high level | Originally latched high level | Originally latched low level | Newly latched high level | Off | On |
| / | / | / | Rising edge | Originally latched high level | Originally latched high level | Originally latched high level | Newly latched high level | On | On |
| / | / | Rising edge | Rising edge | Originally latched low level | Originally latched low level | Newly latched high level | Newly latched high level | Off | Off |
| / | / | Rising edge | Rising edge | Originally latched high level | Originally latched high level | Newly latched high level | Newly latched high level | On | On |
| Rising edge | Rising edge | Rising edge | Rising edge | Newly latched high level | Newly latched high level | Newly latched high level | Newly latched high level | On | On |
| Falling edge | / | / | / | Newly latched low level | Originally latched low level | Originally latched low level | Originally latched low level | Off | Off |
| Falling edge | / | / | / | Newly latched low level | Originally latched low level | Originally latched high level | Originally latched high level | Off | Off |
| Falling edge | / | / | / | Newly latched low level | Originally latched high level | Originally latched low level | Originally latched low level | Off | Off |
| Falling edge | / | / | / | Newly latched low level | Originally latched high level | Originally latched high level | Originally latched high level | Off | On |
| / | Falling edge | / | / | Originally latched low level | Newly latched low level | Originally latched low level | Originally latched low level | Off | Off |
| / | Falling edge | / | / | Originally latched low level | Newly latched low level | Originally latched high level | Originally latched high level | Off | Off |
| / | Falling edge | / | / | Originally latched high level | Newly latched low level | Originally latched low level | Originally latched low level | Off | Off |
| Falling edge | Falling edge | / | / | Newly latched low level | Newly latched low level | Original-state low level | Original-state low level | Off | Off |
| Falling edge | Falling edge | / | / | Newly latched low level | Newly latched low level | Original-state high level | Original-state high level | Off | Off |
| / | Falling edge | / | / | Original-state high level | Newly latched low level | Original-state high level | Original-state high level | Off | On |
| / | / | Falling edge | / | Original-state low level | Original-state low level | Newly latched low level | Original-state low level | Off | Off |
| / | / | Falling edge | / | Original-state low level | Original-state low level | Newly latched low level | Original-state high level | Off | Off |
| / | / | Falling edge | / | Original-state high level | Original-state high level | Newly latched low level | Original-state low level | Off | Off |
| / | / | Falling edge | / | Original-state high level | Original-state high level | Newly latched low level | Original-state high level | Off | On |
| / | / | / | Falling edge | Original-state low level | Original-state low level | Original-state low level | Newly latched low level | Off | Off |
| / | / | / | Falling edge | Original-state low level | Original-state low level | Original-state high level | Newly latched low level | Off | On |
| / | / | / | Falling edge | Original-state high level | Original-state high level | Original-state low level | Newly latched low level | On | Off |
| / | / | / | Falling edge | Original-state high level | Original-state high level | Original-state high level | Newly latched low level | On | Off |
| / | / | Falling edge | Falling edge | Original-state low level | Original-state low level | Newly latched low level | Newly latched low level | Off | Off |
| / | / | Falling edge | Falling edge | Original-state high level | Original-state high level | Newly latched low level | Newly latched low level | Off | Off |
| Falling edge | Falling edge | Falling edge | Falling edge | Newly latched low level | Newly latched low level | Newly latched low level | Newly latched low level | Off | Off |

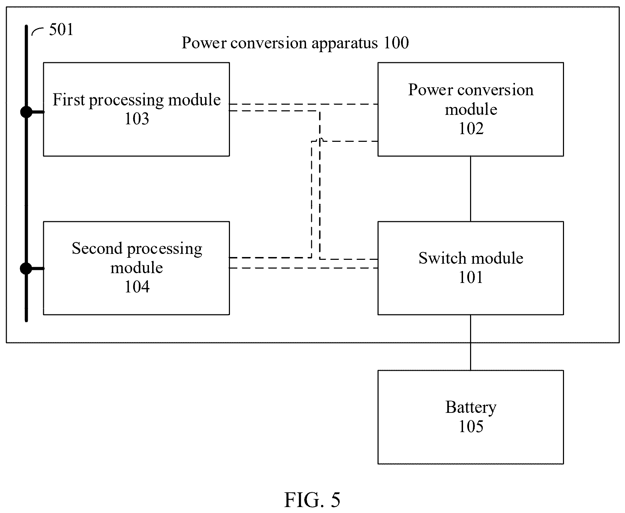

FIG. 5 is a diagram 5 of a structure of a power conversion apparatus according to this application. As shown in FIG. 5, in an implementation, the power conversion apparatus 100 includes a first communication bus 501, the first processing module 103 transmits a periodic signal to the second processing module 104 through the first communication bus 501, the second processing module 104 transmits a periodic signal to the first processing module 103 through the first communication bus 501, and the first processing module 103 and the second processing module 104 control the power conversion module 102 through the first communication bus 501.

The first processing module 103 and the second processing module 104 in the power conversion apparatus 100 establish communication through the first communication bus 501, and the first processing module 103 and the second processing module 104 send the periodic signal to each other within the specified period through the first communication bus 501, to determine whether the first processing module 103 or the second processing module 104 is in a normal response state. When one processing module is in an abnormal response state, the other processing module may control the power conversion module 102 to stop running and the switch module 101 to be turned off.

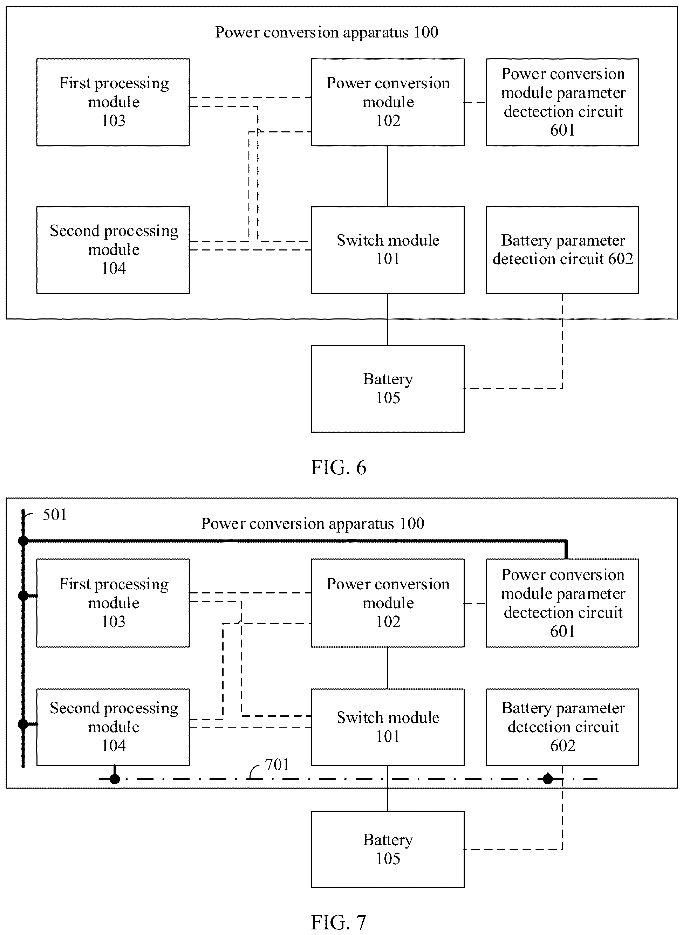

FIG. 6 is a diagram 6 of a structure of a power conversion apparatus according to this application. As shown in FIG. 6, in an implementation, the power conversion apparatus 100 includes the power conversion module parameter detection circuit 601 and the battery parameter detection circuit 602, the power conversion module parameter detection circuit 601 is configured to detect the charging current or the discharging current of the battery 105, and the battery parameter detection circuit 602 is configured to detect the voltage of the battery 105 and the temperature of the battery 105.

The power conversion module parameter detection circuit 601 detects the charging current or the discharging current of the battery, so that the first processing module 103 or the second processing module 104 obtains the charging current or the discharging current of the battery 105 and determines, based on the charging current or the discharging current of the battery 105, whether the switch module 101 or the power conversion module 102 works normally. When the first processing module 103 or the second processing module 104 determines that the charging current or the discharging current of the battery 105 is greater than the current threshold, the first processing module 103 or the second processing module 104 can first control the power conversion module 102 to stop running, and then control the switch module 101 to cut off connection between the power conversion module 102 and the battery 105. This ensures that the switch module 101 can be turned off at a zero current, and charging and discharging between the power conversion module 102 and the battery 105 can safely stop.

The battery parameter detection circuit 602 in the power conversion apparatus 100 detects the temperature of the battery and the voltage of the battery, so that the first processing module 103 or the second processing module 104 obtains the temperature of the battery and the voltage of the battery and determines, based on the voltage of the battery and the temperature of the battery, whether the battery 105 works normally. When the first processing module 103 or the second processing module 104 determines that the voltage of the battery is greater than the voltage threshold or the temperature of the battery is greater than the temperature threshold, the first processing module 103 or the second processing module 104 first controls the power conversion module 102 to stop running, and controls the switch module 101 to cut off connection between the power conversion module 102 and the battery 105. This ensures that the switch module 101 can be turned off at a zero current, and charging and discharging between the power conversion module 102 and the battery 105 can safely stop.

In addition, the first processing module 103 or the second processing module 104 may further estimate a state of charge (state of charge, SOC) of the battery 105 based on the voltage of the battery and the temperature of the battery that are obtained from the battery parameter detection circuit 602, to determine whether the battery 105 works normally.

FIG. 7 is a diagram 7 of a structure of a power conversion apparatus according to this application. As shown in FIG. 7, in an implementation, the power conversion apparatus 100 includes a second communication bus 701, the power conversion module parameter detection circuit 601 transmits the charging current or the discharging current of the battery 105 to the first processing module 103 through the first communication bus 501, and the battery parameter detection circuit 602 transmits the voltage of the battery 105 and the temperature of the battery 105 to at least one of the first processing module 103 or the second processing module 104 through the second communication bus 701.

Communication connection between the first processing module 103 and the power conversion module parameter detection circuit 601 through the first communication bus 501, and the first processing module 103 receives, through the first communication bus 501, the charging current or the discharging current, of the battery 105, detected by the power conversion module parameter detection circuit 601. When the first processing module 103 determines that the charging current or the discharging current of the battery 105 is greater than the current threshold, the first processing module 103 first controls the power conversion module 102 to stop running, and controls the switch module 101 to cut off connection between the power conversion module 102 and the battery 105. Therefore, when charging/discharging currents of the power conversion apparatus 100 are too large, the power conversion module 102 is disconnected from the battery 105 in time, to avoid a danger to the power conversion apparatus 100.

The first processing module 103 and the second processing module 104 are further connected to the battery parameter detection circuit 602 through the second communication bus 701, and the first processing module 103 and the second processing module 104 receive, through the second communication bus 701, the voltage of the battery and the temperature of the battery that are detected by the battery parameter detection circuit 602. The two processing modules are backups of each other. Even if either the first processing module 103 or the second processing module 104 is exceptional, the other module may first control the power conversion module 102 to stop running, and control the switch module 101 to cut off connection between the power conversion module 102 and the battery 105 when determining that the voltage of the battery is greater than the voltage threshold or the temperature of the battery is greater than the temperature threshold. Therefore, when overvoltage or thermal runaway occurs in the battery 105, the power conversion apparatus 100 can cut off connection between the power conversion module 102 and the battery 105 in time, to avoid a danger to the power conversion apparatus 100.

The first processing module and the second processing module in the power conversion apparatus provided in this application are backups of each other. When the first processing module and the second processing module work normally, it can be ensured that the switch module is turned on at a zero current and the power conversion module is normally started. In this way, charging and discharging between the power conversion module and the battery can safely run. When one processing module is exceptional, the other processing module may still control the power conversion module to stop running and the switch module to be turned off at a zero current, so that charging and discharging between the power conversion module and the battery can safely stop. In addition, when any parameter of the temperature of the battery, the voltage of the battery, the charging current, or the discharging current exceeds a corresponding threshold, the first processing module or the second processing module can also cut off connection between the battery and the power conversion module in time. This avoids a danger to the power conversion apparatus due to battery overcharge, overdischarge, a short circuit, and thermal runaway.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A power conversion apparatus, wherein the power conversion apparatus comprises a switch module, a power conversion module, a first processing module, and a second processing module, the power conversion module receives, by using the switch module, power discharged by a battery or charges the battery by using the switch module, the first processing module outputs a first on signal and a first start signal, and the second processing module outputs a second on signal and a second start signal;
in response to the first on signal and the second on signal, the switch module conducts connection between the power conversion module and the battery; and
in response to the first start signal or the second start signal, the power conversion module starts.

2. The power conversion apparatus according to claim 1, wherein the first processing module is configured to output a first off signal and a first stop-running signal, and the second processing module is configured to output a second off signal and a second stop-running signal;
in response to the first stop-running signal or the second stop-running signal, the power conversion module stops running; and
in response to the first off signal or the second off signal, the switch module cuts off connection between the power conversion module and the battery.

3. The power conversion apparatus according to claim 1 or 2, wherein in response to that the second processing module stops running, the first processing module first outputs the first stop-running signal, and outputs the first off signal; and
in response to that the first processing module stops running, the second processing module first outputs the second stop-running signal, and outputs the second off signal.

4. The power conversion apparatus according to any one of claims 1 to 3, wherein in response to that no periodic signal sent by the second processing module is received within a specified period, the first processing module first outputs the first stop-running signal, and outputs the first off signal; and
in response to that no periodic signal sent by the first processing module is received within the specified period, the second processing module first outputs the second stop-running signal, and outputs the second off signal.

5. The power conversion apparatus according to any one of claims 1 to 4, wherein in response to that a charging current or a discharging current of the battery is greater than a current threshold, the first processing module first outputs the first stop-running signal, and outputs the first off signal.

6. The power conversion apparatus according to any one of claims 1 to 5, wherein in response to that a voltage of the battery is greater than a voltage threshold or a temperature of the battery is greater than a temperature threshold, the second processing module first outputs the second stop-running signal, and outputs the second off signal.

7. The power conversion apparatus according to any one of claims 1 to 6, wherein the power conversion apparatus comprises a logic circuit, the first processing module inputs the first on signal and the first off signal to the logic circuit, the second processing module inputs the second on signal and the second off signal to the logic circuit, and the logic circuit inputs a switch module on signal or a switch module off signal to the switch module;
the first on signal comprises an on signal 1 and an on signal 2, the second on signal comprises an on signal 3 and an on signal 4, the first off signal comprises an off signal 1 and an off signal 2, and the second off signal comprises an off signal 3 and an off signal 4; and
in response to the on signal 1, the on signal 2, the on signal 3, and the on signal 4, the logic circuit inputs the switch module on signal to the switch module; and in response to any one or more of the off signal 1, the off signal 2, the off signal 3, and the off signal 4, the logic circuit inputs the switch module off signal to the switch module.

8. The power conversion apparatus according to claim 7, wherein the switch module comprises a first switch and a second switch, the first switch is connected to a positive electrode of the battery and a first end of the power conversion module, the second switch is connected to a negative electrode of the battery and a second end of the power conversion module, the switch module on signal comprises a first switch on signal and a second switch on signal, and the switch module off signal comprises a first switch off signal and a second switch off signal; and
in response to the on signal 1 and the on signal 3, the logic circuit inputs the first switch on signal to the first switch; in response to the on signal 2 and the on signal 4, the logic circuit inputs the second switch on signal to the second switch; in response to the off signal 1 and/or the off signal 3, the logic circuit inputs the first switch off signal to the first switch; and in response to the off signal 2 and/or the off signal 4, the logic circuit inputs the second switch off signal to the second switch.

9. The power conversion apparatus according to claim 8, wherein the logic circuit comprises a first latch, a second latch, a third latch, a fourth latch, a first AND gate, and a second AND gate, the first processing module inputs the on signal 1 or the off signal 1 to the first latch, the first processing module inputs the on signal 2 or the off signal 2 to the second latch, the second processing module inputs the on signal 3 or the off signal 3 to the third latch, and the second processing module inputs the on signal 4 or the off signal 4 to the fourth latch;
the first latch receives the on signal 1 and inputs a high-level signal to the first AND gate, and receives the off signal 1 and inputs a low-level signal to the first AND gate; the second latch receives the on signal 2 and inputs a high-level signal to the second AND gate, and receives the off signal 2 and inputs a low level signal to the second AND gate; the third latch receives the on signal 3 and inputs a high-level signal to the first AND gate, and receives the off signal 3 and inputs a low-level signal to the first AND gate; and the fourth latch receives the on signal 4 and inputs a high-level signal to the second AND gate, and receives the off signal 4 and inputs a low-level signal to the second AND gate; and
in response to the high-level signals input by the first latch and the third latch, the first AND gate inputs the first switch on signal to the first switch; in response to low-level signals input by the first latch and/or the third latch, the first AND gate inputs the first switch off signal to the first switch; in response to the high-level signals input by the second latch and the fourth latch, the second AND gate inputs the second switch on signal to the second switch; and in response to the low-level signals input by the second latch and/or the fourth latch, the second AND gate inputs the second switch off signal to the second switch.

10. The power conversion apparatus according to any one of claims 1 to 9, wherein the power conversion apparatus comprises a first communication bus, the first processing module transmits a periodic signal to the second processing module through the first communication bus, the second processing module transmits a periodic signal to the first processing module through the first communication bus, and the first processing module and the second processing module control the power conversion module through the first communication bus.

11. The power conversion apparatus according to claim 10, wherein the power conversion apparatus comprises a power conversion module parameter detection circuit and a battery parameter detection circuit, the power conversion module parameter detection circuit is configured to detect the charging current or the discharging current of the battery, and the battery parameter detection circuit is configured to detect the voltage of the battery and the temperature of the battery.

12. The power conversion apparatus according to claim 11, wherein the power conversion apparatus comprises a second communication bus, the power conversion module parameter detection circuit transmits the charging current or the discharging current of the battery to the first processing module through the first communication bus, and the battery parameter detection circuit transmits the voltage of the battery and the temperature of the battery to at least one of the first processing module or the second processing module through the second communication bus.

13. An energy storage apparatus, wherein the energy storage apparatus comprises a battery and the power conversion module according to any one of claims 1 to 12.
